# EUROPEAN PATENT APPLICATION

(11) **EP 3 457 703 A1**
(43) Date of publication of application: **20.03.2019**
(21) Application number: 17190814.8
(22) Date of filing: 13.09.2017
(51) Int. Cl.: H04N 21/41, H04N 21/436, H04N 21/81, H04N 21/422

(54) **SMART PLAYER**

(71) Applicant: Vestel Elektronik Sanayi ve Ticaret A.S., 45030 Manisa (TR)
(72) Inventor: ULUAG, Onur, 45030 Manisa (TR); BAKANOGLU, Kagan, 45030 Manisa (TR)
(74) Representative: Ascherl, Andreas

(57) **Abstract**

The present invention refers according to claim 1 to a method for controlling of at least one external device in dependency of video and/or audio content. The inventive method comprises at least the steps: Providing video data (2), in particular as file or stream, providing environmental data (4, 5), in particularly as file or stream, wherein the environmental data (4, 5) defines device operations of at least one external device (14), detecting at least one external device (14) and device properties of said external device (14), wherein the device properties comprise class data, wherein class data identifies the function or functions of the respective external device (14), displaying video content provided by the video data (2), wherein the video content is displayed by means of a display unit, in particularly a TV, operating at least one detected external device (14), in particularly multiple external devices, in dependency of the environmental data (4, 5) and in dependency of the video data (2), wherein the environmental data (4, 5) comprises control data for operating external devices (14) of at least three different classes, wherein the different classes are selected from a group of classes at least comprising acoustic control data, visual control data, motor control data, infrastructure control data and smart device control data.

## Description

The present invention refers according to claim 1 to a method for controlling of at least one external device in dependency of video and/or audio content, according to claim 12 to a computer program product, according to claim 13 to a multimedia device and according to claim 15 to a multimedia system.

### Background of the invention

Document US2017/090437A1 discloses a computing device and method to adjust operation of a smart device to customize an environment surrounding the computing device. The adjustment is made via an Application Program Interface (API) having a language known to the smart device, and via a transport abstraction module to internally route data in a transfer stack and facilitate delivery of the data to the smart device.

US2017/090437A1 has multiple disadvantages, like the audience cannot physically interact with loT devices. The prior art systems do not get any input from the audience. loT device states, loT device API values or sensor data which carry environment details aren't delivered to the system via standard MPEG video stream or a separate file like subtitles files (.srt/.sub are the file formats for subtitles). This will create interoperability issues. The prior art system does not let the audience to choose mandatory or optional loT devices. The prior art systems do not include loT hubs which may run multiple different loT APIs, mobile phone APIs which can generate phone calls or SMS, Cloud loT APIs or any web services such as food order, car alarm etc. Prior art systems do not consider the physical locations of the loT devices and the network topology while controlling loT devices.

### Object of the invention

Thus, it is the object of the present invention to provide an advanced method, computer program product, multimedia device and/or multimedia system. It is a further object of the invention to provide a method, a computer program product, a multimedia device and/or a multimedia system that causes a better user experience, in particularly during watching movies.

### Description of the invention

The before mentioned object is solved by a method for controlling of at least one external device in dependency of video and/or audio content according to claim 1. Said method preferably comprises at least the steps: Providing video data, in particular as file or stream, providing environmental data, in particularly as file or stream, wherein the environmental data defines device operations of at least one external device, detecting at least one external device and device properties of said external device, wherein the device properties comprise class data, wherein class data identifies the function or functions of the respective external device, displaying video content provided by the video data, wherein the video content is displayed by means of a display unit, in particularly a TV, operating at least one detected external device, in particularly multiple external devices, in dependency of the environmental data and in dependency of the video data. It is additionally or alternatively possible to provide audio data, in particularly as file or stream. The one or multiple external device/s can be connected to a local network, like WLAN, and/or global network, like GSM.

According to the present invention acoustic control data is in particularly used for controlling doorbell, alarm, siren, wireless or wired speakers; visual control data is in particularly used for controlling lighting, dimmer; infrastructure control data is in particularly used for controlling curtains, blinds, shades, fan, ventilation, fog machine, air conditioner, heater, gas actuator, fridge, oven, water faucet, toilet; motor control data is in particularly used for controlling mobile devices like robotic vacuum cleaner, haptic actuator, like vibrating element, in particularly of a smart device; sensor control data is in particularly used for controlling, in particularly operating or readout of temperature sensor, input device like key board, gas detector, smoke detector.

In the present invention, the term "smart device" defines a device that has an output means for outputting information, in particularly a display, an internet connectivity, in particularly Wi-Fi and/or GSM, for exchanging data and preferably an interface for inputting data by a user.

This solution is beneficial since multiple different devices, in particular internet-of-things devices, are utilized for generating an ambient atmosphere fitting to the video and/or audio content.

Thus, the present invention relates to devices like loT devices and loT APIs and audio/video streams, more particularly, management of loT devices states according to data embedded to audio/video stream and interactivity with the audience through loT devices and loT APIs.

The present invention further relates to a system and a method of controlling connected devices (such as toT devices, home automation devices, mobile phones, cloud enabled devices etc.) according to data gathered either embedded inside the TS (Transport Stream) or from a separate data file and enabling interactivity with the audience through these connected devices. It mimics the environment and actions of the motion picture using connected devices to make audience feel more realistic experience and immerse reality.

Further preferred embodiments are subject-matter of the following specification parts and/or of the dependent claims.

According to a preferred embodiment of the present invention the environmental data preferably comprises control data for operating external devices of at least three different classes, wherein the different classes are selected from a group of classes comprising or at least comprising acoustic control data, visual control data, motor control data, cloud service control data, infrastructure control data, sensor control data and/or smart device control data.

According to another embodiment of the present invention position data with respect to the position of the external device, in particular for identifying the distance between an external device and the display unit, is provided, wherein the external device is operated in dependency of its class and the position data. This embodiment is beneficial since very precise effects can be generated, thus the generated ambient atmosphere can be simulated very close to reality.

The position data of the external device is gathered according to a further preferred embodiment of the present invention by means of visual position detection and/or beacons and/or a wi-fi positioning system and/or by manually registering the position of the external device/s via a user interface. This embodiment is beneficial since such a position detection is reliable, accurate and user friendly.

The user interface is displayed respectively provided according to a further preferred embodiment of the present invention by means of a smart device, in particularly a smartphone, tablet PC, smart watch or smart TV. This embodiment is beneficial since a map can be displayed and since the respective external devices can be registered easily, in particular by drag and drop, or just by touching or clicking onto the respective position of the user-interface.

According to a further preferred embodiment of the present invention the method further comprises a step of selecting one of multiple actuation levels, wherein the degree of actuation of the external device differs in dependency of the selected level. This embodiment is beneficial since the ambient effects can be switched off or can be switched on. Furthermore, the ambient effects can be adjusted or configured individually. Alternatively, multiple predefined levels can be set. Thus, the user can select the desired degree from a plurality of pre-defined levels.

The external device is according to a further embodiment of the present invention connected to a network, in particularly a local network, wherein the step of detecting the external device comprises the step of analyzing the network. This embodiment is beneficial since the ambient effects respectively environmental effects can be generated inside a specific room or apartment or house or also in additional areas, e.g. like a garden, garage or basement. Furthermore, the effects can cause services or effects somewhere else in the network. In case the network is the internet the effects can define actions or services, like ordering of food or taxi.

Multiple external devices are detected according to a further preferred embodiment of the present invention. The external devices can be of the same type or of different types and wherein individual devices can provide class data with respect to multiple classes.

The classes of loT devices can be but are not limited to:
Lighting: Changing ambient light, color, also changing lighting level. Dimmer: Can be used as lightning level actuator.
Temperature sensor: Learning ambient temperature which will be used as feedback for other smart devices.
Haptic: Create vibration for any wearable. For instance, a man in the video stream is exposed to violence and wearable wrist band can vibrate to create an immersive reality.

Intermediate controllers to control devices with different protocols, Intermediate router/repeater/gateway.

Siren, Alarm, Doorbell: For instance, while watching a horror movie, and a scene that doorbell (siren or alarm) bells to make loud noise to scare people, can be more effective on audiences if belling the real doorbell in the house.

Wired and wireless speakers (Bluetooth speakers): For instance, while watching a horror movie, and a scene there is a crackle sound that comes from a room away can be simulated by speakers. Each speaker can be selected as near, mid-range or far away device.

Keypad: For instance, during movie, there may be a puzzle that starring actor/actress tries to solve, and when scene comes to entering the password, Smart Player may pause the video and ask audience to enter the password.

Gas detector, Smoke detector, Gas actuator, Fog machine: For instance, if scene is smoky, foam machine can be used to simulate same environment.

Air Conditioner, Heater, Ventilation: Can be used clearing environment from smoke when scene is over. This actuation command may not be included in the stream, but can be determined by Smart Player by comparing smoke level of scenes. Fan: Similar use case of Ventilation. But can also be used as wind effect.

Smart device, in particular smart phone: Fake call, phone alert such as SMS, notification, vibration via mobile application.

Motors: Kind of actuation is advised by Smart Player to audience to select correct matching. Shade, curtain, blinds.

On/off switch: Kind of actuation is advised by Smart Player to audience to select correct matching. Any web services: Food ordering, car alarm.

The smart device control data is utilized according to a further preferred embodiment for operating the external device in case the external device is a smart phone, in particularly for causing fake calls. This embodiment is beneficial since smart devices, in particularly smart phones, are very powerful devices that can output visual, acoustic and haptic signals. Thus, a broad range of effects can be generated by addressing such a smart device.

The cloud service control data is utilized according to a further embodiment of the present invention for interacting with at least one cloud based service, in particularly for ordering goods, in particularly food, via the internet. This embodiment is beneficial since the ambient or environmental effects are extended to a devices or services in arbitrary distance.

The external device comprises according to another embodiment of the present invention sensors for detecting user interaction, wherein the external device provides report data identifying the user interaction with the external device. This embodiment is beneficial since the actuation of further devices, in particular external devices or loT-devices, can be modified to better fit to the user behavior. Thus, in case position changes of the user are detected an adaption of the device actuation can be carried out to fit the device actuation to the new user position. That preferably means, that further external devices are operated in dependency of the identified user interaction and/or the displayed video data is modified in dependency of the identified user interaction.

The before mentioned object is also solved by a computer program product for executing a method according to any of the preceding claims.

The before mentioned object is also solved by a multimedia device, in particularly TV or set-top box according to claim 13. Said multimedia device preferably comprises at least a video data input port, in particular for inputting video data as file or stream, an environmental data input port, in particularly for inputting environmental data as file or stream, wherein the environmental data defines device operations of at least one external device, a network means for connecting to a network for detecting of at least one external device and for detecting of device properties of said external device, wherein the device properties comprise class data, wherein class data identifies the function or functions of the respective external device, a display unit for displaying video content provided by the video data, a control unit for operating of at least one detected external device, in particularly multiple external devices, in dependency of the environmental data and in dependency of the video data, wherein the environmental data comprises control data for operating external devices of at least three different classes, wherein the different classes are selected from a group of classes at least comprising acoustic control data, visual control data, motor control data, cloud service control data, infrastructure control data, sensor control data, smart device control data.

According to a further preferred embodiment of the present invention a receiver means for receiving the video and environmental data and a decoder means for decoding the video and environmental data are provided.

The before mentioned object is also solved by a multimedia system according to claim 15. Said multimedia system preferably comprises a control unit multiple external internet of things devices (loT-devices), at least one display unit and a network, wherein the external internet of things devices and the control unit are connected to the same network, wherein the external loT-devices are actuated in dependency of the displayed video content and preferably also in dependency of position data with respect to the position of the external device, in particular for identifying the distance between an external device and the display unit, is provided, wherein the external device is also operated in dependency of its class and the position data.

Thus, the present invention can be used as a software product (like media player software), embedded software application, SaaS (Software as a Service), cloud software or browser plugin etc. or as a device such as media player devices, CD/DVD/Blu-Ray players, TV, STB, Smart Home Hub etc. That means the present invention can be integrated on STB/TV, smart home hubs, PC etc. Therefore, while not playing multimedia stream, it can be used as stand-alone smart home controller. It has a communication interface, wherein wired or wireless mediums can be used. It further preferably works with any network structure (directly, with Star network topology or mesh networking through intermediate hops).

Further benefits, goals and features of the present invention will be described by the following specification of the attached figure, in which exemplarily components of the invention are illustrated. Components of the devices, units and methods according to the invention, which match at least essentially with respect to their function can be marked with the same reference sign, wherein such components do not have to be marked or described multiple times with respect to said figure. In the following the invention is just exemplarily described with respect to the attached figure.

### Brief Description of the Drawing

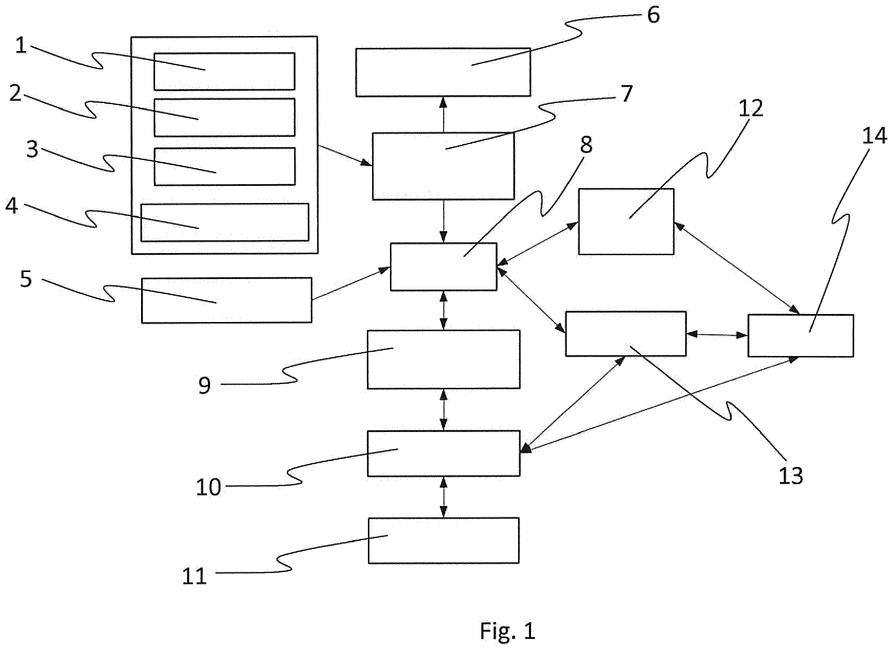

- Fig. 1: illustrates an overview of the system according to the present invention.

### Detailed Description of the Drawing

Reference number 1 indicates audio data, in particular provided as audio stream. Reference number 2 indicates video data, in particular provided as video stream. Reference number 2 indicates subtitle data, in particular provided as stream, wherein each stream preferably contains subtitle data for a plurality of languages. Furthermore, reference number 4 indicates environment data, in particular provided as stream. Environmental data 4 preferably contains a plurality of streams with labels of hardness of data such as soft, hard, real etc. Each environmental data set, in particular stream, preferably contains a plurality of device values paired with a device class respectively class data. The environmental data further preferably contains information about mandatory and optional device classes respectively class data. Reference numbers 1 to 4 preferably indicate data streams. It is alternatively or additionally possible to provide said data as data files. Therefore, reference number 5 exemplarily indicates an environment data file. The environmental data file preferably contains the same information as the environment data stream and they can be used interchangeably according to capabilities of end-user product such as decoder capability and Internet connection. Each device preferably comprises at least one communication unit, for receiving and/or outputting of information, in particular one or multiple transceivers.

Reference number 6 indicates a media player API. The media player API 6 is preferably responsible of playing AV (Audio, Video) streams, displaying contents, playing audio with speakers, headphones or transmitting audio with wireless interfaces.

Reference number 7 indicates a receiver and decoder means. The receiver and decoder means is preferably responsible for reading streams from mediums such as DVB-SCT (Digital Video Broadcast - Satellite, Cable, Terrestrial), IP Stream, IPTV, RF Broadcast etc, and decoding stream data to separate audio, video, subtitles, device data, service information etc.

Reference number 8 indicates a control unit respectively a smart player. Control unit 8 preferably forms a combination of media player and smart home systems. It reads data from Environment Data Stream 4 or from Environment Data File 5, and sets respectively operates devices respectively external devices respectively loT devices 14 accordingly. Devices respectively loT devices are connected smart home devices such as plugs, dimmers, wearables such as watch, vehicles, motors etc. Said external devices are preferably controlled by acoustic control data, in particularly for controlling devices like doorbell, alarm, siren, wireless or wired speakers and/or visual control data, in particularly for controlling devices like lighting, dimmer; infrastructure control data, in particularly for controlling devices like curtains, blinds, shades, fan, ventilation, fog machine, air conditioner, heater, gas actuator, fridge, oven, water faucet, toilet; motor control data, in particularly for controlling devices like mobile devices like robotic vacuum cleaner, haptic actuator, like vibrating element, in particularly of a smart device; sensor control data in particularly for controlling, in particularly operating or readout of temperature sensor, input devices like key board, gas detector, smoke detector.

Additionally, or alternatively reference number 9 indicates a multiple mobile phone API. This is beneficial since multiple mobile phone API 9 enables control unit respectively smart player 8 to communicate with mobile phones, in particularly via GSM or LTE or Wi-Fi, to send and receive application specific messages. Reference number 10 indicates one or multiple smart devices, in particularly mobile phones. Said mobile phones are preferably end-user mobile phones. The smart devices preferably run an application that enables control or interaction of the present method. Reference number 11 indicates the GSM Network. The GSM Network 10 is a cellular network. Mobile Phones can be connected to said network. It enables making calls, sending SMS, connecting 3G or similar networks to send and receive data. Reference number 12 indicates multiple loT (internet-of-Things) API. The multiple loT API is preferably multi-protocol supported API of connected devices such as standard wired or wireless home automation or smart home protocols like ZigBee, Z-Wave, Thread, KNX or proprietary protocols that enables devices to communicate over plurality of protocols like Wi-Fi, Bluetooth, PLC (Power Line Communication) etc. Reference number 13 indicates a multiple cloud API. The multiple cloud API 13: represents a collection of cloud platforms which are enabled to communicate with connected devices 14, in particularly connected loT devices 14 via internet. There may be an optional gateway device of application if needed to convert 14 loT Devices protocol to IP protocol.

Thus, the method or system according to the present invention preferably plays multimedia streams with sensor/device data integrated. The multimedia stream, which contains Audio Stream 1, Video Stream 2, Subtitle Stream 3, Environment Data Stream 4 and/or Environment Data File 5, can be retrieved from RF broadcast, IP broadcast, recorded mediums like CD, DVD, Blue-ray, HDD or downloaded content. The receiver and decoder 7 takes the stream, decodes audio, video and sensor/device data from the stream. It displays video, plays audio and if capable it also plays some of the sensor/device data with its actuators, Mobile Phones 10 and/or loT devices 14. The loT devices 14 are preferably connected to receiver 7 preferably over wireless protocols (WIFI, Bluetooth, ZigBee, Proprietary Wireless Protocols, Zwave, Power Line Communication (PLC), KNX or proprietary or any custom protocol, etc.), and they have plurality of actuator classes which represents their capabilities. For example, an actuator class can be a temperature actuator, a light bulb can be a light actuator, a seat can be an accelerometer actuator, gyroscope actuator, vibration actuator etc.

Thus, the present invention preferably works as described in the following:

A multimedia stream (live stream or recorded stream) is provided that preferably includes audio data 1, video data 2, optional subtitle data and optional environment data stream, in particularly coded with multiple device data, is retrieved by receiver and decoder 7. If the multimedia stream does not contain the environment data stream 4, environment data file 5 is retrieved from a media source such as CD/DVD/Blu-Ray, HDD, IP network etc.

Receiver and Decoder unit 7 parses transport stream and separates audio stream 1, video stream 2, optional subtitle stream 3 and optional environment data stream 4 or environment data file 5. It then plays audio/video and sends sensor/device data to smart player respectively control unit 8. Smart player respectively control unit 8 reads device data from received stream and checks the audience's available loT devices 14 for compatibility with multimedia stream. Smart player respectively control unit 14 asks audience respectively requests to select among available plurality of actuation levels such as low, high, fake, real etc., which are supported by audience's loT devices 14 check on previous step. Smart Player respectively control unit 8 preferably automatically assigns device data with actual devices, in particular external devices like loT devices, according to their class and preferably additionally according to their position information (for example: if a horror movie requires far away speaker actuator, smart player respectively control unit 8 maps this device data to far away speaker actuator in loT devices 14 if plurality of speakers available). Smart player respectively control unit 8 is also capable of asking the audiences to map devices, in particularly by showing them descriptive information on UI, embedded inside the environment data stream 4 and/or environment data file 5. Smart player respectively control unit 8 additionally or alternatively controls mobile devices, like mobile or smart phones and loT devices 14, according to that data with timing information, in particularly by matching the video stream data with the environmental data (stream or file). Smart player respectively control unit 8 or media player API 6 preferably can pause the video when the video scene requires audience interactivity through loT devices or smart devices, like smart phone, smart watch or tablet pc. When the audience interacts with loT devices 14, the device state is forwarded to smart player respectively control unit 8. Smart player respectively control unit 8 preferably sends play commands to media player API 6 and the video continues to play. Smart player respectively control unit 8 has information about network topology and/or distance/location information of loT devices 14 from its gateways/controllers.

Environment data stream 4 or environment data file 5 which carry environment details may be delivered to the system via standard MPEG video stream or a separate file such as .srt (subtitle file) which will ease interoperability with other systems.

Thus, the present invention refers to a method for controlling of at least one external device in dependency of video and/or audio content. The inventive method comprises at least the steps: Providing video data 2, in particular as file or stream, providing environmental data 4, 5, in particularly as file or stream, wherein the environmental data 4, 5 defines device operations of at least one external device 14, detecting at least one external device 14 and device properties of said external device 14, wherein the device properties comprise class data, wherein class data identifies the function or functions of the respective external device 14, displaying video content provided by the video data 2, wherein the video content is displayed by means of a display unit, in particularly a TV, operating at least one detected external device 14, in particularly multiple external devices, in dependency of the environmental data 4, 5 and in dependency of the video data 2, wherein the environmental data 4, 5 comprises control data for operating external devices 14 of at least three different classes, wherein the different classes are selected from a group of classes at least comprising acoustic control data, visual control data, motor control data, infrastructure control data and smart device control data.

**List of reference numbers**

| | | | |
|---|---|---|---|
| 1 | audio stream | IP | Internet Protocol |
| 2 | video stream | IPTV | Internet Protocol Television |
| 3 | subtitle stream | loT | Internet of Things |
| 4 | environmental data stream | SaaS | Software as a Service |
| 5 | environmental data file | CD | Compact Disc |
| 6 | movie player API | DVD | Digital Optical Disc |
| 7 | receiver and decoder | HDD | Hard Disc Drive |
| 8 | control unit | API | Application Programming Interface |
| 9 | multiple mobile phone API | AV | Audio-Video |
| 10 | mobile phone | GSM | Global System for Mobile Communication |
| 11 | GSM Network | | |
| 12 | multiple loT API | RF | Radio Frequency |
| 13 | multiple cloud API | DVB-SCT | Digital Video Broadcast - Satellite, Cable, Terrestrial |
| 14 | device | | |
| TS | Transport Stream | SMS | Short Message Service |
| TV | Television | 3G | Third Generation |
| STB | Set-Top-Box | PLC | Power Line Communication |

## Claims

1. Method for controlling of at least one external device (14) in dependency of video
and/or audio content,
at least comprising the steps:
Providing video data (2), in particular as file or stream,
providing environmental data (4, 5), in particularly as file or stream,
wherein the environmental data (4, 5) defines device operations of at least one external device (14),
detecting at least one external device (14) and device properties of said external device (14),
wherein the device properties comprise class data,
wherein class data identifies the function or functions of the respective external device (14),
displaying video content provided by the video data (2),
wherein the video content is displayed by means of a display unit, in particularly a TV,
operating at least one detected external device (14), in particularly multiple external devices, in dependency of the environmental data (4, 5) and in dependency of the video data (2),
wherein the environmental data (4, 5) comprises control data for operating external devices (14) of at least three different classes,
wherein the different classes are selected from a group of classes at least comprising acoustic control data, visual control data, motor control data, infrastructure control data and smart device control data.

2. Method according to claim 1,
**characterized in that**
providing of position data with respect to the position of the external device (14), in particular for identifying the distance between an external device and the display unit,
wherein the external device (14) is operated in dependency of its class and the position data.

3. Method according to claim 2,
**characterized in that**
the position data of the external device (14) is gathered by means of visual position detection and/or beacons and/or a wi-fi positioning system and/or by manually registering the position of the external device/s via a user interface.

4. Method according to claim 3,
**characterized in that**
the user interface is displayed by means of a smart device (14), in particularly a smartphone, tablet PC, smart watch or smart TV.

5. Method according to any of the preceding claims
**characterized by**
a step of selecting one of multiple actuation levels,
wherein the degree of actuation of the external device (14) differs in dependency of the selected level.

6. Method according to any of the preceding claims
**characterized in that**
the external device is connected to a network, in particularly a local network, wherein the step of detecting the external device (14) comprises the step of analyzing the network.

7. Method according to any of the preceding claims
**characterized in that**
multiple external devices (14) are detected,
wherein the external devices (14) can be of the same type or of different types,
and wherein individual devices (14) can provide class data with respect to multiple classes

8. Method according to any of the preceding claims
**characterized in that**
the smart device control data is utilized for operating the external device (14) in case the external device (14) is a smart phone, in particularly for causing fake calls.

9. Method according to any of the preceding claims
**characterized in that**
cloud service control data is provided and utilized for interacting with at least one cloud based service, in particularly for ordering goods, in particularly food, via the internet.

10. Method according to any of the preceding claims
**characterized in that**
the external device (14) comprises sensors for detecting user interaction, wherein the external device (14) provides report data identifying the user interaction with the external device (14).

11. Method according to claim 10,
**characterized in that**
further external devices are operated in dependency of the identified user interaction and/or the displayed video data is modified in dependency of the identified user interaction.

12. Computer program product for executing a method according to any of the preceding claims.

13. Multimedia device, in particularly TV or set-top box,
at least comprising
a video data input port, in particular for inputting video data (2) as file or stream,
an environmental data input port, in particularly for inputting environmental data (4, 5) as file or stream,
wherein the environmental data (4, 5) defines device operations of at least one external device (14),
a network means for connecting to a network for detecting of at least one external device (14) and for detecting of device properties of said external device (14),
wherein the device properties comprise class data,
wherein class data identifies the function or functions of the respective external device,
a display unit for displaying video content provided by the video data (2),
a control unit (8) for operating of at least one detected external device (14), in particularly multiple external devices, in dependency of the environmental data and in dependency of the video data,
wherein the environmental data (3) comprises control data for operating external devices (14) of at least three different classes,
wherein the different classes are selected from a group of classes at least comprising acoustic control data, visual control data, motor control data, cloud service control data, infrastructure control data, sensor control data, smart device control data
and/or
wherein position data with respect to the position of the external device, in particular for identifying the distance between an external device (14) and the display unit, is provided,
wherein the external device (14) is operated in dependency of its class and the position data.

14. Multimedia device according to claim 13,
**characterized in that**
a receiver means for receiving the video and environmental data and a decoder means for decoding the video and environmental data (4) are provided.

15. Multimedia system,
at least comprising
a control unit (8)
multiple external internet of things devices (loT-devices) (14)
at least one display unit
and a network, wherein the external internet of things devices and the control unit are connected to the same network,
wherein the external loT-devices (14) are actuated in dependency of the displayed video content (2).
